# EUROPÄISCHE PATENTANMELDUNG

(11) **EP 1 929 872 A1**
(43) Date of publication of application: **11.06.2008**
(21) Application number: 06125681.4
(22) Date of filing: 08.12.2006
(51) Int. Cl.: A21D 2/18, A21D 2/26, A21D 2/36, A21D 8/04, A21D 10/00, A21C 1/14, A23L 1/00, A23P 1/02, B01F 15/02

(54) **Starter dough concentrate and manufacture thereof**

(71) Applicant: Bühler AG, 9240 Uzwil (CH)
(72) Inventor: Hallab, Rami, 9244 Niederuzwil (CH); Bohm, Arturo, 9242 Oberuzwil (CH)
(74) Representative: Frommhold, Joachim

(57) **Abstract**

The invention relates to a method of manufacturing a starter dough dry concentrate, comprising the following steps:
a) using a fermented dough comprising dry components and water, said dough having a water content of 20% to 70% by weight;
b) pelletizing said dough into dough pellets; and c) drying said dough pellets into dried dough pellets having a water content of 5% to 15% by weight.

## Description

The present invention relates to a method of manufacturing an improved starter dough concentrate.

Starter doughs or sourdoughs are used in breadmaking. Such doughs are made from flour, water and some microflora that causes fermentation of the dough. Typically, a small amount of starter dough is mixed into some unfermented ("normal") dough. This overall dough mixture can then be fermented before being baked.

Recently, a special type of bran sourdough was suggested and described in "Sourdough: a tool for the improved flavour, texture and shelf-life of wheat bread", VTT Publications 569, Espoo 2005, by Kati Katina. This bran sourdough was shown to effectively compensate the negative effect of added wheat bran on bread volume and shelf-life in high-fibre baking.

Whatever the recipe, starter doughs can be kept at low temperatures or even be frozen for storage and/or transportation before being distributed to bakeries where the starter dough is mixed with normal dough. However, this requires a cooled distribution network with refrigeration facilities. Also, special facilities for dosage, handling and processing are required in the bakeries.

It is an object of the present invention to provide an improved starter dough which does not suffer from the drawbacks of existing fermented doughs.

According to the present invention, this object is achieved by a method of manufacturing a starter dough dry concentrate, comprising the following steps:
a) using a fermented dough comprising dry components and water, said dough having a water content of 20% to 70% by weight;
b) pelletizing said dough into dough pellets; and
c) drying said dough pellets into dried dough pellets having a water content of 5% to 15% by weight.

Surprisingly, any breads that where made using the starter dough dry concentrate according to the present invention turned out to be very similar to breads that where made using the corresponding conventional wet starter dough, i.e. the dried dough pellets according to the present invention, when used in conjunction with a normal (unfermented dough), resulted in the same or very similar breads as if the fermented dough was used. In particular, the sensory characteristics of the conventional wet-starter-dough-based bread were not affected by drying the conventional starter dough and using it in its dried form instead of conventional wet starter dough.

The method according to the present invention may further comprise a step of comminuting said dried dough pellets of step c) into dry dough particles. These small dry dough particles have a large surface-to-volume ratio. As a result, they interact more easily with any normal dough (unfermented dough) throughout which they are dispersed by mixing. Preferably, the dough in step a) comprises bran, a binding agent, a fermenting agent and water. The water content is preferably in the range of 40% to 60% by weight.

The fermented dough to be used in step a) according to the present invention may be prepared by mixing and kneading the above dry components and water. This does not require special mixing equipment and mixing methods. Rather, a wide range of existing mixing equipment can be used.

In a preferred embodiment of the present invention, the dry components comprise bran, a binding agent and a fermenting agent. In particular, the bran contributes favourably to the flavour of the bread made using the starter dough dry concentrate according to the present invention.

Preferably, the binding agent is selected from the group consisting of flour, gluten, hydrocolloids and gelatinized starch. Such binding agents improve the rheological properties of the dough during the baking process.

Preferably, the fermenting agent is selected from the group consisting of a yeast species and a bacterium species. Alternatively, the fermenting agent may be an enzyme species or additionally, may comprise an enzyme species.

In a preferred embodiment of the present invention, the pelletizing in step b) is carried out in an extruder having a forming unit. Preferably, the step of feeding the dough from step a) into the extruder is carried out using a particular feeding unit.

Advantageously, part of the water is already removed from the dough during its passage through the extruder. Preferably, such removal of water is carried out by venting the extruder.

In a further preferred embodiment of the invention, a first mixture or first dough comprising a first combination of dry components and a first water content is mixed and kneaded with a second mixture or second dough comprising a second combination of dry components and a second water content. This mere mixing allows adjustment of the water content of the resulting dough to any value between the water contents of the first and the second mixture and even below, if additional water removal such as venting is performed.

The first water content of the first mixture may be between 20% and 70% by weight and the second water content of said second mixture may be between 2% and 14% by weight. Preferably, the first water content is between 40% and 60% by weight, i.e. the first mixture is a dough-type mixture, and the second water content is between 4% and 8% by weight, i.e. the second mixture is a powdery or granular mixture.

Preferably, the first combination of dry components is identical to the second combination of dry components. i.e. the first mixture and the second mixture differ only in water content. Thus, the mixing ratio between the first and the second mixture can be used in a comfortable manner to adjust the water content of the dough pellets.

In a preferred embodiment, the first mixture (preferably the dough-type mixture) is fed into the extruder through first feeding means which comprises a funnel having an opening at its bottom, and two intermeshing screws extending along the inner funnel wall into the bottom opening. The inner funnel wall and the two intermeshing screws of the first feeding means engage each other. Feeding is carried out by rotating the funnel around its funnel axis and by rotating each of the intermeshing screws around its respective screw axis. This arrangement and feeding procedure causes all movable parts of the arrangement to strip each other, i.e. a self-cleaning feeding means is provided. Preferably, the second mixture (preferably the powdery or granular mixture) is fed into said extruder as a solid bulk material through second feeding means comprising a bulk material feeder such a hopper and rotary valve or a conveying screw arrangement.

The forming unit preferably comprises a nozzle plate and a cutting blade. More preferably, the cutting blade is a rotary blade, and most preferably, the cutting blade is covered with an anti-adhesive or non-adhesive layer. This arrangement allows the strands exiting the nozzle plate to be cut into pellets having a prismatic shape with their cross-section being determined by the nozzle apertures in the nozzle plates and their length being determined by the cutting blade's repeat frequency or the rotary blade's angular velocity, i.e. the rotary blade's revolutions per minute.

Preferably, the dough pellets according to the present invention have a rod-like or prismatic shape with the shortest distance from the pellet axis to the pellet surface being between 0.2 mm and 1 mm. Such shapes are easily formed by selecting appropriate nozzle plates and cutting blade speeds, i.e. repeat frequency or rotary blade rpm. The short distances from any point inside the pellet to the pellet surface allows rapid drying of the pellets. Also, there is more intensive interaction between the dried starter dough pellets and any normal dough (unfermented dough) throughout which the pellets are dispersed by mixing. More preferably, the shortest distance from the pellet axis to the pellet surface is between 0.4 mm and 0.8 mm. Most preferably, the shortest distance from the pellet axis to the pellet surface is between 0.4 mm and 0.6 mm. Advantageously, the pellets have a cylindrical shape. This eliminates most of the edges and reduces breakage and dust during pellet drying and pellet handling.

In a preferred embodiment of the invention, the drying in step c) is carried out in a gas or gas mixture at temperatures between 40°C and 100°C. More preferably, the drying in step c) is carried out in a gas or gas mixture at temperatures between 60°C and 85°C. The drying in step c) may be carried out in a fluid bed drier and preferably comprises a step of pneumatically feeding said dough pellets from step b) into the fluid bed dryer. Preferably, the gas or gas mixture is selected from the group consisting of air, nitrogen and carbon dioxide.

The optional comminuting step may be carried out using a hammer mill or a roller mill. Preferably, the dried dough pellets of step c) are comminuted to a particle size distribution where 90% of all dry dough particles have a particle size smaller than 1000µm, and more preferably to a particle size distribution where 90% of all dry dough particles have a particle size smaller than 500µm.

In a preferred embodiment, the binding agent is a water-soluble binding agent. In this case, merely pelletizing without milling is feasible. If a water-soluble binding agent is used in the starter dough pellets, the pellets may have a larger size and milling is not required.

Preferably, the dried dough pellets are hermetically packaged immediately after said drying step. In this case, there is no drying involved.

Preferably, the dry dough particles obtained by comminuting the dried dough pellets are hermetically packaged immediately after said comminuting step.

Any further objects and advantages of the invention will be readily apparent from the following description of some preferred embodiments given by way of example only.
- Fig. 1: is a schematic diagram showing the main process steps of the method according to the present invention;
- Fig. 2: is a sectional elevation view showing a feeding unit; and
- Fig. 3: is a top plan view showing the feeding unit of Fig. 2.

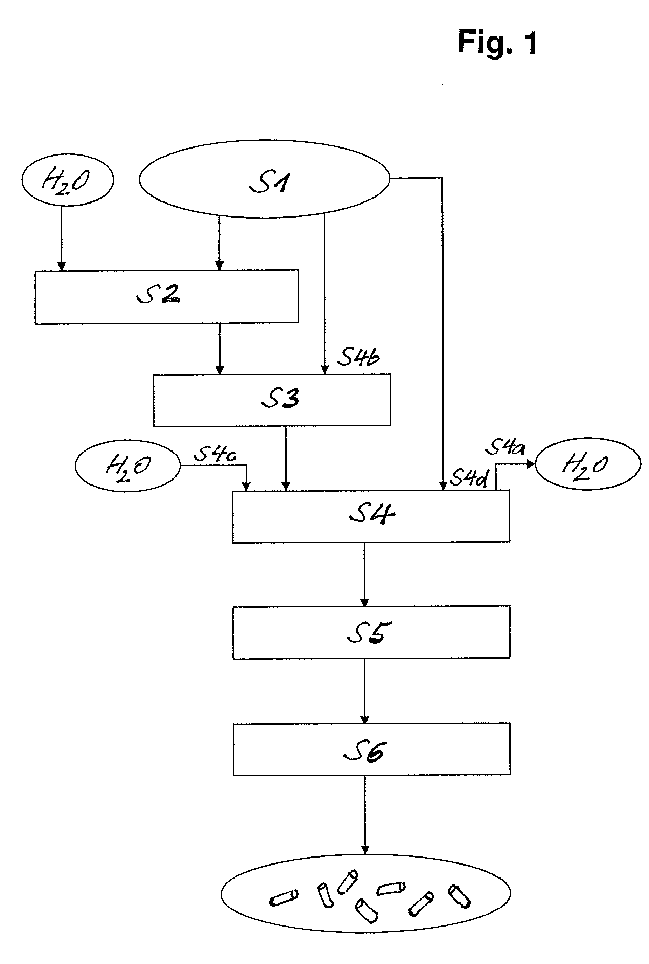

Fig. 1 shows the main process steps of the method according to the present invention. The method comprises the following main steps:
➢ S1) using raw materials for S2) preparing a fermented dough comprising dry components and a water content of 20% to 70% by weight; S3) feeding said dough into an extruder; S4) extruding said raw materials in an extruder, thus forming a dough; S5) pelletizing said dough into dough pellets at the extruder outlet; and S6) drying said dough pellets into dried dough pellets having a water content of 5% to 15% by weight.

In addition, the method may further comprise a step (not shown in Fig. 1) of comminuting said dried dough pellets into dry dough particles. These small dry dough particles have a large surface-to-volume ratio and are easily mixed with any normal dough (unfermented dough) for subsequent baking.

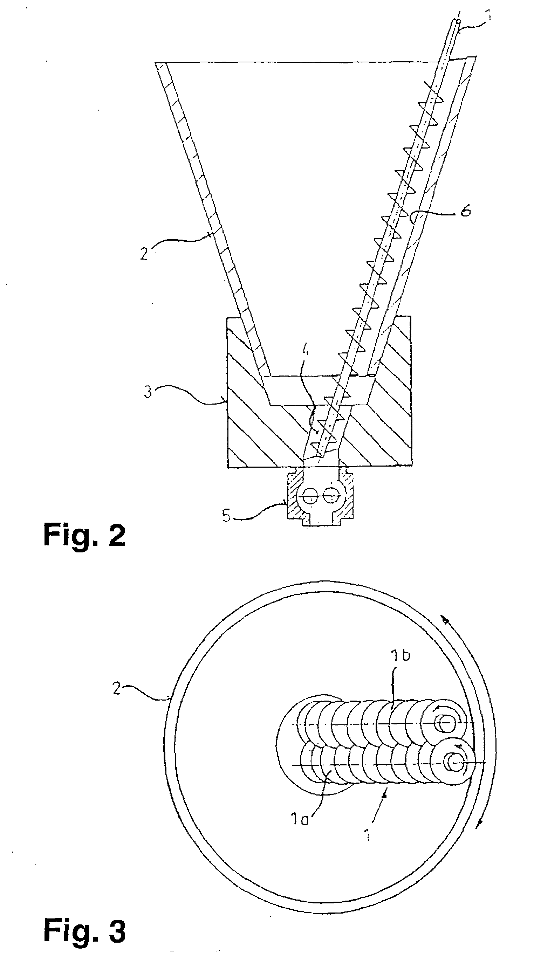

The pelletizing is carried out in an extruder having a forming unit and the feeding of the dough into the extruder (step S3) is carried out using a particular feeding unit shown in Figs. 2 and 3.

Some of the water is removed from the dough during its passage through the extruder by venting the extruder (step S4a). Alternatively or additionally, the wet fermented dough comprising dry components and a higher water content is mixed and kneaded in the extruder with a dry mixture fed into the extruder and comprising dry components and a lower water content (step S4b). This mixing alone allows adjustment of the water content of the resulting dough to any value between the water content of the wet dough and the dry mixture or even below, if additional water removal by venting is performed. Alternatively, only dry components are fed into the extruder (step 4b) and mixed with water fed into the extruder (step 4c). The dry components feeding may be carried out using the same special feeding unit as for the wet fermented dough (step S4b) or using a regular dry component feeder (step S4d).

Fig. 2 is a sectional elevation view and Fig. 3 is a top plan showing a feeding unit for feeding the wet dough-like component into the extruder.

The wet dough to be fed into the extruder (not shown) is entered into a funnel 2 and conveyed downward in the direction of a bottom outlet opening 4 by rotating the funnel 2 around its vertical axis and by rotating each of a pair 1 of intermeshing screws 1a and 1b extending along the inner wall of the funnel 2 into the bottom opening 4. This channel-like opening 4 extends into a pump 5 mounted directly at the extruder. The pump 5 and the feeding unit comprising the funnel 2 and the twin worm 1 are operated such that the conveying capacity of the feeding unit 1, 2 exceeds the conveying capacity of the pump 5.

The combined rotations of the funnel 2, and of the screws or worms 1 a and 1 b strip the wet dough from the inner funnel wall and from the worm surfaces. As a result, this arrangement causes all parts 1 a, 1 b, 2 of the feeding unit to strip each other and to be self-cleaning.

In a high-shear mode, the individual worms 1 a, 1 b are driven in the same rotational direction, and in a low-shear mode, they are driven in opposite rotational directions.

The combination of the channel-like opening 4 with at least one of the worms 1a and 1 b extending into said opening 4 may be replaced by a Mohno-pump (not shown).

## Claims

1. A method of manufacturing a starter dough dry concentrate, comprising the following steps:
a) using a fermented dough comprising dry components and water, said dough having a water content of 20% to 70% by weight;
b) pelletizing said dough into dough pellets; and
c) drying said dough pellets into dried dough pellets having a water content of 5% to 15% by weight.

2. The method according to claim 1, further comprising a step of comminuting said dried dough pellets of step c) into dry dough particles.

3. The method according to claims 1 or 2, wherein said dough in step a) comprises bran, a binding agent, a fermenting agent and water, said water content preferably being in the range of 40% to 60% by weight.

4. The method according to claims 1 or 2, wherein said fermented dough to be used in step a) is prepared by mixing and kneading said dry components and water.

5. The method according to claim 4, wherein said dry components comprise bran, a binding agent and a fermenting agent.

6. The method according to any one of claims 3 to 5, wherein said binding agent is selected from the group consisting of flour, gluten, hydrocolloids and gelatinized starch.

7. The method according to any one of claims 3 to 6, wherein said fermenting agent is selected from the group consisting of a yeast species and a bacterium species.

8. The method according to any one of claims 3 to 7, wherein said fermenting agent is an enzyme species.

9. The method according to any one of claims 1 to 8, wherein said pelletizing in step b) is carried out in an extruder having a forming unit.

10. The method according to claim 9, further comprising a step of feeding said dough from step a) into said extruder using a feeding unit.

11. The method according to claims 9 or 10, wherein part of the water is removed from said dough during its passage through said extruder.

12. The method according to claim 11, wherein removal of water is carried out by venting said extruder.

13. The method according to any one of claims 9 to 12, wherein in said extruder, a first mixture or first dough comprising a first combination of dry components and a first water content is mixed and kneaded with a second mixture or second dough comprising a second combination of dry components and a second water content.

14. The method according to claim 13, wherein said first water content of said first mixture is between 20% and 70% by weight and said second water content of said second mixture is between 2% and 14% by weight.

15. The method according to claim 14, wherein said first water content is between 40% and 60% by weight.

16. The method according to claims 14 or 15, wherein said second water content is between 4% and 8% by weight.

17. The method according to any one of claims 13 to 16, wherein said first combination of dry components is identical to said second combination of dry components.

18. The method according to any one of claims 13 to 17, wherein said first mixture is fed into said extruder through first feeding means comprising a funnel having an opening at its bottom, two intermeshing screws extending along the inner funnel wall into said opening, wherein all of said inner funnel wall and said two intermeshing screws engage each other, and comprising the steps of rotating said funnel around its funnel axis and rotating each of said intermeshing screws around its respective screw axis.

19. The method according to any one of claims 13 to 18, wherein said second mixture is fed into said extruder as a solid bulk material through second feeding means comprising a bulk material feeder.

20. The method according to any one of claims 9 to 19, wherein said forming unit comprises a nozzle plate and a cutting blade.

21. The method according to claim 20, wherein said cutting blade is a rotary blade.

22. The method according to any one of claims 20 or 21, wherein said cutting blade is covered with an anti-adhesive or non-adhesive layer.

23. The method according to any one of claims 1 to 22, wherein said dough pellets have a rod-like or prismatic shape, the shortest distance from the pellet axis to the pellet surface being between 0.2 mm and 1 mm.

24. The method according to claim 23, wherein said shortest distance from the pellet axis to the pellet surface is between 0.4 mm and 0.8 mm.

25. The method according to claim 23, wherein said shortest distance from the pellet axis to the pellet surface is between 0.4 mm and 0.6 mm.

26. The method according to any one of claims 23 to 25, wherein said pellets have a cylindrical shape.

27. The method according to any one of claims 1 to 26, wherein said drying in step c) is carried out in a gas or gas mixture at temperatures between 40°C and 100°C.

28. The method according to claim 26, wherein said drying in step c) is carried out in a gas or gas mixture at temperatures between 60°C and 85°C.

29. The method according to claims 27 or 28, wherein said drying in step c) is carried out in a fluid bed drier.

30. The method according to claim 29, further comprising a step of pneumatically feeding said dough pellets from step b) into said fluid bed dryer.

31. The method according to any one of claims 27 to 30, wherein said gas or gas mixture is selected from the group consisting of air, nitrogen and carbon dioxide.

32. The method according to any one of claims 2 to 31, wherein said comminuting is carried out using a hammer mill.

33. The method according to any one of claims 2 to 31, wherein said comminuting is carried out using a roller mill.

34. The method according to any one of claims 2 to 33, wherein said dried dough pellets of step c) are comminuted to a particle size distribution where 90% of all dry dough particles have a particle size smaller than 1000µ/m.

35. The method according to any one of claims 2 to 33, wherein said dried dough pellets of step c) are comminuted to a particle size distribution where 90% of all dry dough particles have a particle size smaller than 500µm.

36. The method according to any one of claims 3 to 35, wherein said binding agent is a water-soluble binding agent.

37. The method according to claim 1, wherein said dried dough pellets are hermetically packaged immediately after said drying step.

38. The method according to claim 2, wherein said dry dough particles are hermetically packaged immediately after said comminuting step.

39. A plant for manufacturing a starter dough dry concentrate using the method according to any one of claims 1 through 38, comprising:
➢ an extruder for mixing a wet, dough-like component and a dry, powdery or granular component, said extruder having a first inlet for feeding said wet component and a second inlet for feeding said dry component and having an outlet for outputting the dough-like mixture resulting from mixing said wet component and said dry component;
➢ a pelletizer for pelletizing said dough-like mixture into dough pellets; and
➢ a dryer for drying said pellets into dried pellets;
**characterized in that** said first inlet is equipped with first feeding means comprising a funnel having an opening at its bottom, two intermeshing screws extending along the inner funnel wall into said opening, wherein all of said inner funnel wall and said two intermeshing screws engage each other, said funnel being rotatable around its funnel axis and each of said intermeshing screws being rotatable around its respective screw axis; and said second inlet is equipped with second feeding means comprising a bulk material feeder.

40. The plant according to claim 39, wherein said pelletizer comprises a nozzle plate at the extruder outlet and cutting blade adjacent the nozzle plate.

41. The plant according to claim 40, wherein said cutting blade is a rotary blade.

42. The plant according to any one of claims 40 or 41, wherein said cutting blade is covered with an anti-adhesive or non-adhesive layer.

43. The plant according to any one of claims 39 to 42, wherein said dryer is a fluid bed drier.

44. The plant according to any one of claims 39 to 43, further comprising a pneumatic feeder for feeding said dough pellets from said pelletizer into said fluid bed dryer.
